# EUROPÄISCHE PATENTANMELDUNG

(11) **EP 1 619 464 A1**
(43) Veröffentlichungstag der Anmeldung: **25.01.2006**
(21) Anmeldenummer: 05105853.5
(22) Anmeldetag: 30.06.2005
(51) Int. Cl.: G01B 5/012, G01B 21/04, B23Q 3/155

(54) **Vorrichtung zum Erkennen eines an einem Messgerät verwendeten Messkopfes**

(30) Priorität: 20.07.2004 DE 202004011364 U
(71) Anmelder: Klingelnberg GmbH, 42499 Hückeswagen (DE)
(72) Erfinder: MIES, Georg, 51688, Wipperfürth (DE)
(74) Vertreter: OK pat AG

(57) **Zusammenfassung**

Vorrichtung mit einem abnehmbarem Messkopf (15) zum Vermessen eines Werkstücks, wobei die Vorrichtung einen Aufnahmebereich (17.1) zum Ankoppeln des Messkopfes (15) aufweist. Im Aufnahmebereich (17.1) sind Sensoren (17.2) in fest vorgegebenen Positionen angeordnet. Der abnehmbare Messkopf (15) weist mehrere Gegenelemente auf, die mit den Sensoren (17.2) in Wechselwirkung stehen, wenn der Messkopf (15) im Aufnahmebereich (17.1) angekoppelt ist, wobei eine Codierung des abnehmbaren Messkopfes (15) vorgebbar ist, indem die Position der Gegenelemente eingestellt wird.

## Beschreibung

Die Erfindung betrifft Vorrichtungen mit abnehmbaren Messköpfen und Messgeräte mit solchen Vorrichtungen.

### Stand der Technik

Es gibt verschiedene Vorrichtungen, wie zum Beispiel Messgeräte, die mit einem auswechselbaren Messkopf ausgestattet sind.

Eine Ausführungsform eines konventionellen Messgeräts weist einen Messkopf auf, der mittels Federkraft mit einem Tastsystem verbunden werden kann.

Es gibt auch Beispiele für Messköpfe, die mittels Permanentmagneten an einem Tastsystem eines Messgeräts befestigt sind. Ein entsprechendes Beispiel ist in dem Deutschen Gebrauchsmuster DE-GM 7400071 beschrieben.

Ein weiteres Messgerät ist in der US-Patentschrift US 5,755,038 dargestellt. Dieses spezielle Messgerät zeichnet sich dadurch aus, dass es einen Messkopf vorsieht, der über Permanentmagnete mit einem Tastsystem verbunden ist. Ein ähnlicher Ansatz ist in der PCT-Anmeldung WO 03/087708 beschrieben.

Ein weiteres Beispiel eines Messgeräts mit auswechselbarem Messkopf ist der Deutschen Patentschrift DE 3320127 C2 zu entnehmen. Dort ist ein Messgerät beschrieben, dessen Messkopf mittels einer Kombination eines Permanentmagneten und eines Elektromagneten befestigt ist.

Die auswechselbaren Messköpfe sollen möglichst schnell und unkompliziert abnehmbar sein. Ausserdem ist es wichtig, dass ein Messgerät in der Lage ist verschiedene Messköpfe voneinander zu unterscheiden, da zum Beispiel je nach Art des aktuell verwendeten Messkopfes andere Parameter bei der Auswertung von Messsignalen Anwendung finden. Es ist auch denkbar, dass abhängig von der Form und/oder Grösse des Messkopfes andere Zustellwege und Bewegungsabläufe des Messkopfes zum Einsatz kommen.

Von daher liegt der Erfindung die Aufgabe zugrunde, einen Ansatz bereit zu stellen, der es einer Vorrichtung ermöglicht zu erkennen, welcher Messkopf im Moment installiert ist.

Eine weitere Aufgabe der Erfindung liegt darin, einen Ansatz für eine einfache und sichere Erkennung eines verwendeten Messkopfes bereit zu stellen.

Die Aufgaben werden erfindungsgemäss durch eine Vorrichtung gemäss Patentanspruch 1 und ein Messgerät gemäss Patentanspruch 10 gelöst.

Erfindungsgemäss ist diese Aufgabe dadurch gelöst, dass eine Vorrichtung mit abnehmbarem Messkopf zum Vermessen eines Werkstücks vorgesehen wird, die einen Aufnahmebereich zum Ankoppeln des Messkopfes aufweist. Im Aufnahmebereich sind mehrere Sensoren in fest vorgegebenen Positionen angeordnet und der abnehmbare Messkopf weist mehrere Gegenelemente auf, die mit den Sensoren in Wechselwirkung stehen, wenn der Messkopf im Aufnahmebereich angekoppelt ist. Es ist eine Codierung des abnehmbaren Messkopfes vorgebbar, indem die Position der Gegenelemente mechanisch, zum Beispiel durch einen Verstellmechanismus, eingestellt wird.

Erfindungsgemäss ist diese Aufgabe dadurch gelöst, dass ein Messgerät mit mehreren abnehmbaren Messköpfen zum Vermessen eines Werkstücks bereit gestellt wird. Das Messgerät weist ein Tastsystem mit einem Aufnahmebereich zum Ankoppeln eines der Messköpfe auf. Im Aufnahmebereich sind mehrere Sensoren in fest vorgegebenen Positionen angeordnet. Jeder der mehreren abnehmbaren Messköpfe weist Gegenelemente auf, die mit den Sensoren in Wechselwirkung stehen, wenn der eine Messkopf im Aufnahmebereich angekoppelt ist. Es ist eine Codierung der mehreren abnehmbaren Messköpfe vorgebbar, indem an jedem der mehreren abnehmbaren Messköpfe die Position der Gegenelemente einstellbar ist.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben. Es zeigen:
- **FIG. 1A**: ein erstes Messgerät, gemäss Erfindung, in einer perspektivischen Ansicht;
- **FIG. 1B**: eine Teilansicht des erstes Messgerät, gemäss Erfindung, in einer perspektivischen, stark schematisierten Ansicht;
- **FIG. 2A**: eine Schnittansicht eines Aufnahmebereichs eines Tastsystems, gemäss Erfindung;
- **FIG. 2B**: eine Schnittansicht des Tastsystems gemäss Fig. 2A;
- **FIG. 2C**: eine Draufsicht des Tastsystems gemäss Fig. 2A;
- **FIG. 3A**: eine schematische Rückansicht eines Tastkopfes, der im Aufnahmebereich eines Tastsystems montiert ist, wobei an dem Tastkopf gemäss Erfindung eine ersten Codierung eingestellt ist;
- **FIG. 3B**: eine schematische Rückansicht des Tastkopfes nach Fig. 3A, wobei an dem Tastkopf gemäss Erfindung eine zweite Codierung eingestellt ist;
- **FIG. 3C**: eine schematische Rückansicht des Tastkopfes nach Fig. 3A, wobei an dem Tastkopf gemäss Erfindung eine dritte Codierung eingestellt ist;
- **FIG. 3D**: eine schematische Rückansicht des Tastkopfes nach Fig. 3A, wobei an dem Tastkopf gemäss Erfindung eine vierte Codierung eingestellt ist;
- **FIG. 4A-4P**: verschiedene schematische Schnittansichten eines Tastkopfes, der im Aufnahmebereich eines Tastsystems montiert ist, wobei in jeder der Figuren an dem Tastkopf gemäss Erfindung eine andere Codierung eingestellt ist.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

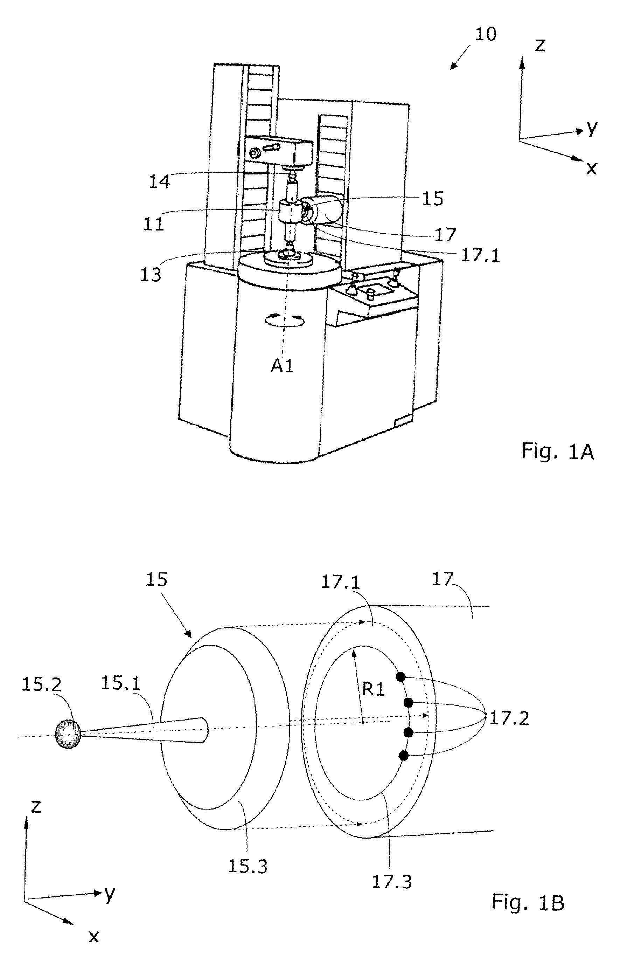

Eine erste Vorrichtung 10 gemäss Erfindung ist in den Figuren 1A und 1B gezeigt. Bei der in Fig. 1A gezeigten Vorrichtung 10 handelt es sich um ein vollautomatisches, CNC-gesteuertes Verzahnungsmessgerät 10. Das Verzahnungsmessgerät 10 ist geeignet zum Prüfen von Werkstücken 11, wie zum Beispiel Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Das Verzahnungsmessgerät 10 umfasst einen über eine Ansteuerung 12 antreibbaren Mitnehmer 13 und ein Zentriermittel 14, wobei der Mitnehmer 13 und das Zentriermittel 14 so angeordnet sind, dass ein zu vermessendes rotationssymmetrisches Präzisionsteil 11 (Werkstück) koaxial zwischen Mitnehmer 13 und Zentriermittel 14 einspannbar ist, wie in Fig. 1A anhand eines Zylinderrades 11 gezeigt.

Das Verzahnungsmessgerät 10 umfasst, wie in Fig. 1B gezeigt, mindestens einen Messkopf 15, der zum dreidimensionalen Vermessen des in dem Verzahnungsmessgerät 10 eingespannten Präzisionsteiles 11 mit einem Messtaster 15.1, 15.2 (zum Beispiel ein Drei-Koordinaten-Tastsystem) ausgestattet ist. Vorzugsweise ist ein Tastsystem 17 vorgesehen, das in der Höhe parallel zur Koordinatenachse z verschoben werden kann. Ausserdem kann der Messkopf 15 weitere Zustellbewegungen in Richtung der senkrecht zueinander stehenden Koordinatenachsen x und y ausführen, wobei eine entsprechende (CNC) Steuerung vorgesehen ist. Der Messkopf 15 ist abnehmbar und ist zum Vermessen eines Werkstücks 11 ausgelegt. Das Verzahnungsmessgerät 10 weist am Tastsystem 17 einen Aufnahmebereich 17.1 zum Ankoppeln des Messkopfes 15 auf, wie durch Pfeile angedeutet. Im Aufnahmebereich 17.1 sind n=4 Sensoren 17.2 an fest vorgegebenen Positionen angeordnet. Generell gilt, dass n gemäss Erfindung eine ganze Zahl grösser gleich zwei ist. Der abnehmbare Messkopf 15 weist m Gegenelemente auf, die in Fig. 1B verdeckt sind, da sie auf der Rückseite eines (Wechsel-)Tellers 15.3 des Messkopfes 15 sitzen. Die m Gegenelemente stehen mit den n Sensoren 17.2 in Wechselwirkung, wenn der Messkopf 15 im Aufnahmebereich 17.1 angekoppelt ist. Es kann gemäss Erfindung am abnehmbaren Messkopf 15 eine Codierung vorgegeben werden, indem die Position der n Gegenelemente durch einen Verstellmechanismus mechanisch verstellt wird.

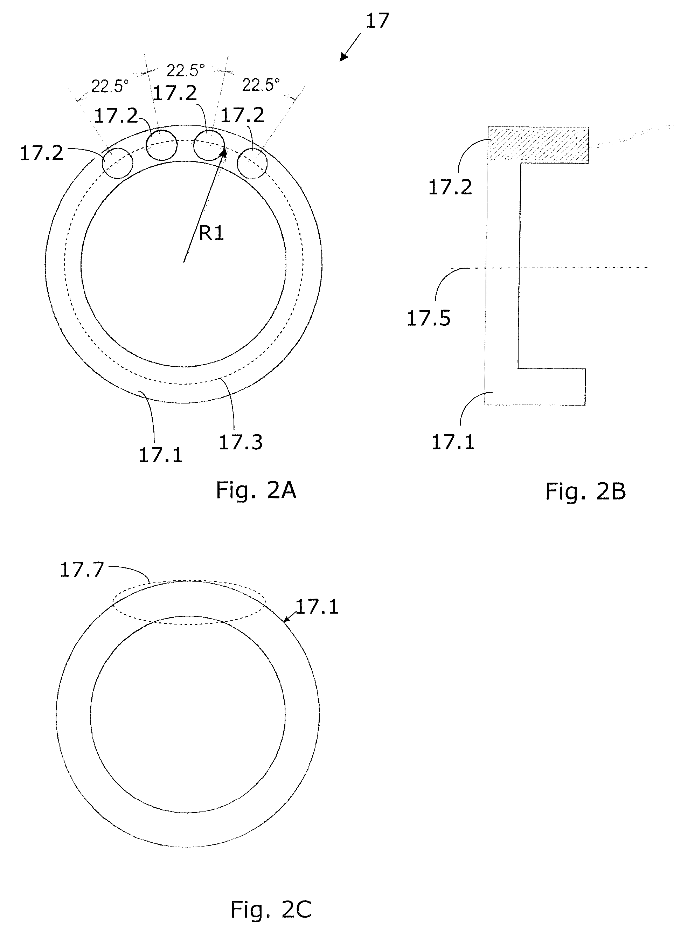

Details hierzu werden nun im Zusammenhang mit einer weiteren Ausführungsform erläutert. In den Figuren 2A bis 2C sind verschiedene Ansichten eines Tastsystems 17 mit einen Aufnahmebereich 17.1 zum Ankoppeln eines Messkopfes 15 gezeigt. Fig. 2A ist ein Schnitt in der x-z-Ebene. Der Schnitt verläuft knapp unterhalb der Oberfläche des Tastsystems 17, um die n=4 Sensoren 17.2 zeigen zu können, die im Tastsystem 17 der vorliegenden Ausführungsform im Bereich 17.7 hinter einer dünnen Oberfläche versteckt sind, wie man anhand der Draufsicht in Fig. 2C erkennen kann. In der gezeigten Ausführungsform liegen die n=4 Sensoren 17.2 auf einem Kreisbogensegment 17.3, das einen Radius R1 hat. Zwischen den n Sensoren 17.2 liegt jeweils ein Winkelabstand β1, der im vorliegenden Fall 22,5° beträgt..

In der Schnittdarstellung in Fig. 2B kann man einen Schnitt durch einen der Sensoren 17.2 erkennen. Der Sensor 17.2 sitzt, wie bereits beschrieben, unmittelbar unter der Oberfläche des Tastsystems 17. Dadurch sind die Sensoren 17.2 mechanisch geschützt. Ausserdem ergibt sich eine glatte Oberfläche, die einfach zu reinigen ist. Mehrere Sensoren 17.2 können zusammen eine bauliche Einheit bildet.

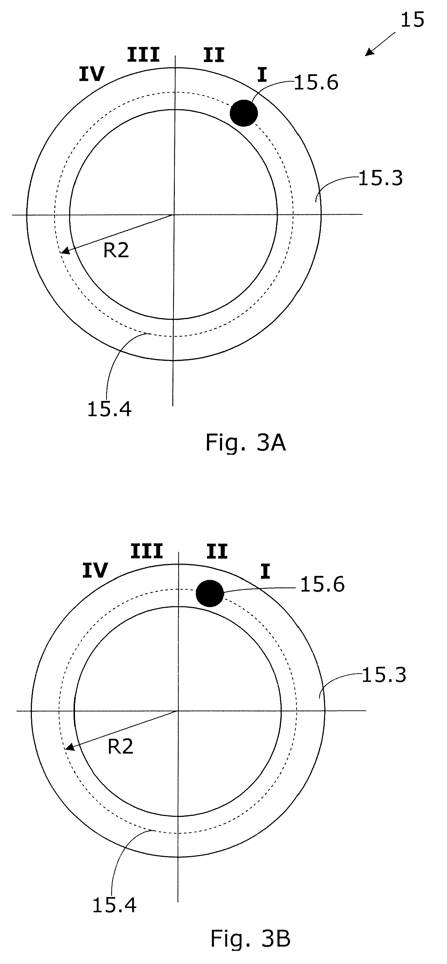

In den Figuren 3A bis 3D sind rückwärtige Ansichten eines Tastkopfes 15 in schematisierter Form gezeigt. In dem gezeigten Ausführungsbeispiel weist der Tastkopf 15 m=1 Gegenelemente 15.6 auf. In den Figuren 3A bis 3D sind die Positionen der Sensoren 17.2 durch die römischen Ziffern I, II, III und IV angedeutet. In Fig. 3A ist die Codierung des Tastkopfes 15 so eingestellt, dass das eine Gegenelement 15.6 vor dem auf Position I befindlichen Sensor 17.2 des Tastsystems 17 zu liegen kommt, wenn der Tastkopf 15 am Aufnahmebereich 17.1 montiert ist. Da das Gegenelement 15.6 unmittelbar neben dem Sensor 17.2 auf Position I liegt, kann der Sensor 17.2 die Anwesenheit erkennen.

Die Sensoren 17.2 und Gegenelemente 15.6 werden gemäss Erfindung so gewählt, dass sich eine Wechselwirkung zwischen den beiden ergibt. Vorzugsweise wird ein Magnetfeldsensor (Näherungsschalter) als Sensor 17.2 und ein Magnet als Gegenelement 15.6 eingesetzt. Es können aber auch andere aktive oder passive Sensor/Gegenelementpaare eingesetzt werden, die zum Beispiel optisch, kapazitiv oder induktiv arbeiten. Wichtig bei der Wahl der Sensoren und Gegenelemente ist es, dass der gesamte Aufbau möglichst einfach und störungsfrei arbeiten soll.

Eine Auswerteeinheit der Vorrichtung 10 kann jeden der n Sensoren 17.2 auswerten, um daraus eine Aussage über die Codierung zu ermitteln. In Fig. 3A würde der Sensor 17.2 auf der Position I ein Signal geben, während die anderen Sensoren 17.2 kein Signal, oder wesentlich schwächere Signale, liefern. In ein binäres System übertragen, entspricht die in Fig. 3A gezeigte Position der Zahl 0001.

Ein anderer Tastkopf 15 ist so codiert, dass das Gegenelement 15.6 auf der Position II sitzt, wie in Fig. 3B gezeigt. In Fig. 3B würde der Sensor 17.2 auf der Position II ein Signal geben, während die anderen Sensoren 17.2 kein Signal, oder wesentlich schwächere Signale, liefern. In ein binäres System übertragen, entspricht die in Fig. 3B gezeigte Position der Zahl 0010.

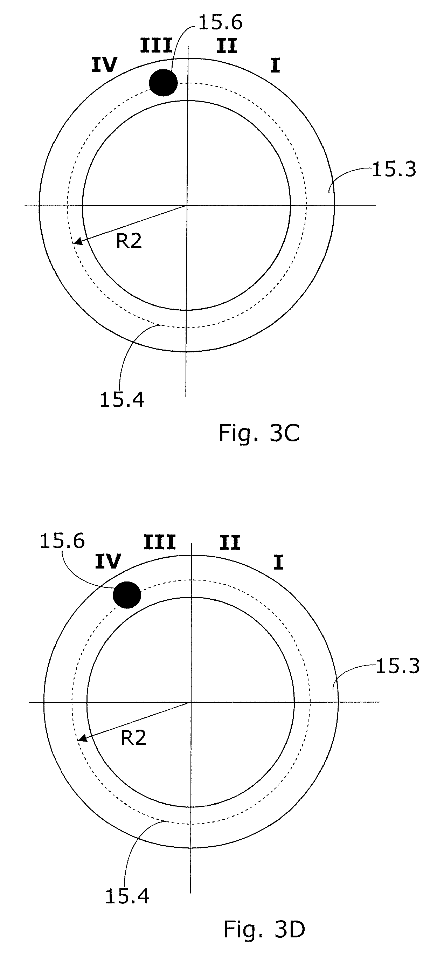

Ein weiterer Tastkopf 15 ist so codiert, dass das Gegenelement 15.6 auf der Position III sitzt, wie in Fig. 3C gezeigt. In Fig. 3C würde der Sensor 17.2 auf der Position III ein Signal geben, während die anderen Sensoren 17.2 kein Signal, oder wesentlich schwächere Signale, liefern. In ein binäres System übertragen, entspricht die in Fig. 3C gezeigte Position der Zahl 0100.

Noch ein weiterer Tastkopf 15 ist so codiert, dass das Gegenelement 15.6 auf der Position IV sitzt, wie in Fig. 3D gezeigt. In Fig. 3D würde der Sensor 17.2 auf der Position IV ein Signal geben, während die anderen Sensoren 17.2 kein Signal, oder wesentlich schwächere Signale, liefern. In ein binäres System übertragen, entspricht die in Fig. 3D gezeigte Position der Zahl 1000.

Falls kein Tastkopf 15 vorhanden ist, oder falls die Codierung so vorgenommen wurde, dass das Gegenelement 15.6 auf einer Position sitzt, die nicht mit einem der Sensoren 17.2 zur Deckung gelangt, so kann die Auswerteeinheit daraus schliessen, dass kein Tastkopf 15 angeschlossen ist. Man kann die Auswerteeinheit aber auch so programmieren, dass das Signal 0000 so gewertet wird, als ob ein "falscher" oder fehlerhafter Tastkopf 15 montiert wäre.

Es ist offensichtlich, dass abhängig von den ganzen Zahlen n und m mehrere verschiedene Varianten möglich sind, wobei diejenigen Lösungen bevorzugt werden, die aus Kosten- und/oder Platzgründen mit möglichst wenigen Sensoren auskommen.

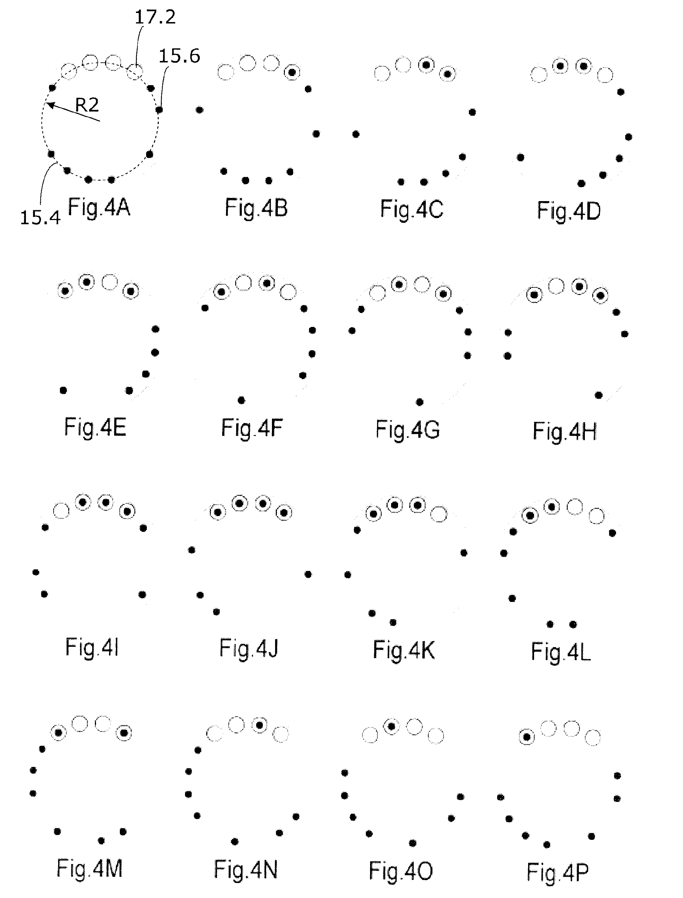

Als besonders vorteilhaft hat sich eine Ausführungsform erwiesen, bei der n=4 Sensoren 17.2 und m=8 Gegenelemente 15.6 zum Einsatz kommen. Es können in diesem Fall 2ⁿ verschiedene Tastköpfe 15 unterschieden werden, wie anhand der Figuren 4A bis 4P ersichtlich ist. Gemäss dieser bevorzugten Ausführungsform sind auf einem Kreisbogen 15.4 mit Radius R2 sechzehn verschiedene Positionen definiert, die jeweils einen Winkelabstand β2 haben, der 22,5° beträgt. D.h., es gilt R2 ≈ R1 und β2 ≈ β1. An acht der insgesamt sechzehn verschiedenen Winkelpositionen befinden sich Gegenelemente 15.6, die in den Figuren 4A bis 4P als schwarze Kreise gezeigt sind. Durch diese spezielle Anordnung erhält man ein binäres Wort mit 4 Bit, das unmittelbar ausgelesen und verarbeitet werden kann. In jeder der Figuren 4A bis 4P sieht man einen anderen Tastkopf, die sich durch eine entsprechende Einstellung einer verdrehbaren Scheibe oder eines verdrehbaren Rings unterscheiden. Die drehbaren Scheiben liegen in den gezeigten Abbildungen in der Zeichenebene und sitzen co-axial auf dem Tastsystem 17. Die n=4 Sensoren 17.2 des Tastsystems 17 sind durch vier offene Kreise angedeutet. Die Position der Sensor 17.2 wird nicht verändert, sondern die Codierung ergibt sich durch ein mechanisches Verändern (Verdrehen, Verschieben, Umkonfigurieren) der Tastköpfe 15.

In Fig. 4A ist ein Tastkopf 15 gezeigt, dessen Gegenelemente 15.6 durch Verstellen der drehbaren Scheibe oder eines verdrehbaren Rings so eingestellt sind, dass beim Ansetzen des Tastkopfes 15 auf dem Tastsystem 17 keines der Gegenelemente 15.6 vor einem der n=4 Sensoren 17.2 zu liegen kommt. Dies entspricht in binärer Ausdruckweise einer 0000. In Fig. 4B ist nun ein Tastkopf 15 gezeigt, dessen Gegenelemente 15.6 durch Verstellen der drehbaren Scheibe oder eines verdrehbaren Rings so eingestellt sind, dass beim Ansetzen des Tastkopfes 15 auf dem Tastsystem 17 eines der Gegenelemente 15.6 vor einem der n=4 Sensoren 17.2 zu liegen kommt. Dies entspricht in binärer Ausdruckweise einer 0001. In Fig. 4C ist nun ein Tastkopf 15 gezeigt, dessen Gegenelemente 15.6 durch Verstellen der drehbaren Scheibe oder eines verdrehbaren Rings so eingestellt sind, dass beim Ansetzen des Tastkopfes 15 auf dem Tastsystem 17 zwei der Gegenelemente 15.6 vor zweien der n=4 Sensoren 17.2 zu liegen kommen. Dies entspricht in binärer Ausdruckweise einer 0011.

Der besseren Übersichtlichkeit halber sind die verschiedenen Codierungen in einer Tabelle zusammen gefasst.

| Abbildung | Codierung | Tastkopf-Nummer |
|---|---|---|
| 4A | 0000 | 0 |
| 4B | 0001 | 1 |
| 4C | 0011 | 2 |
| 4D | 0110 | 3 |
| 4E | 1101 | 4 |
| 4F | 1010 | 5 |
| 4G | 0101 | 6 |
| 4H | 1011 | 7 |
| 4I | 0111 | 8 |
| 4J | 1111 | 9 |
| 4K | 1110 | 10 |
| 4L | 1100 | 11 |
| 4M | 1001 | 12 |
| 4N | 0010 | 13 |
| 4o | 0100 | 14 |
| 4P | 1000 | 15 |

Eine erfindungsgemässe Vorrichtung 10 kann wie folgt verwendet werden. Es wird an einem abnehmbaren Abtastkopf 15 eine Codierung durch das Einstellen der Position von m Gegenelementen vorgegeben. Wie beschrieben, kann die Codierung zum Beispiel durch das Verdrehen einer Scheibe oder eines Rings vorgegeben werden, welche die m Gegenelemente 15.6 in fest vorgegebenen Positionen trägt. Es können aber auch Magnete in Bohrungen eingesetzt oder eingeschraubt werden, was als Umkonfigurieren bezeichnet wird.

Nachdem der Abtastkopf 15 auf diese Art und Weise codiert wurde, kann er an dem Tastsystem 17 befestigt werden. Das Tastsystem 17, oder die Vorrichtung 10, an der das Tastsystem 17 befestigt ist, ermittelt nun die Codierung durch Abfragen von n Sensoren 17.2, die in fest vorgegebenen Positionen in dem Aufnahmebereich 17.1 für den Abtastkopf 15 angeordnet sind. Beim Ermitteln der Codierung wird zum Beispiel für jeden der n Sensoren 17.2 erfasst, ob sich eines der m Gegenelemente 15.6 des Abtastkopfes 15 in einem Wechselwirkungsbereich befindet. Die so ermittelte Codierung wird nun mit einer gespeicherten Codierung verglichen, wobei bei Übereinstimmung eine Erkennung des Tastkopfes 15 möglich ist.

Vorzugsweise wird im Rahmen eines Initialisierungsverfahren die Vorrichtung 10 vorbereitet. Dies kann zum Beispiel geschehen, indem zu einer gespeicherte Codierung Information ausgewählt oder eingegeben wird, die einen entsprechenden Abtastkopf 15 kennzeichnet. Dies kann anhand eines Beispiels besser erläutert werden.

Falls es zum Beispiel zehn verschiedene Tastköpfe 15 gibt, muss die Vorrichtung 10 wissen, welcher der zehn Abtastköpfe durch die Codierung 0000 und welcher der zehn Abtastköpfe 15 durch die Codierung 0001, usw. repräsentiert wird. Vorzugsweise werden zu dieser Information auch noch andere Angaben im Rahmen eines Initialisierungsverfahrens vorgegeben. So kann zum Beispiel der Typ des Tastkopfes 15 vorgegeben werden. Es können aber auch andere Vorgaben gemacht werden, wie anhand folgender Beispiele zu erkennen ist: Empfindlichkeit des Abtastkopfes, Abtastbereich, notwendiger Verstärkungsfaktor, Dimension des Abtastkopfes (Länge des Schafts 15.1 und Grösse der Abtastkugel 15.2) etc.

Anhand dieser Vorgaben kann zum Beispiel sicher gestellt werden, dass die Vorrichtung 10 bei einem Abtastkopf 15 mit dünnem Schaft 15.1 langsamere Bewegungen ausführt, um den Abtastkopf 15, der wegen des dünnen Schafts 15.1 besonders empfindlich ist, nicht zu zerstören. Ausserdem müssen je nach Länge des Schafts 15.1, Grösse der Kugel 15.1 und Orientierung des Abtastkopfes 15 andere Zustellbewegungen gemacht werden.

Vorzugsweise ist der Verstellmechanismus als Ring oder Scheibe ausgeführt, der/die co-axial zu einer Längsachse des Messkopfes 15 montiert ist und um diese Achse gedreht werden kann. Vorzugsweise ist sind verschiedene Raststellungen im Winkelabstand von 22,5° vorgesehen.

In den verschiedenen Ausführungsbeispielen ist von Messköpfen im Generellen und Tastköpfen im Speziellen die Rede. Durch die Verwendung des Begriffs Messkopf soll ausgedrückt werden, dass die Erfindung nicht auf Tastsysteme beschränkt ist, sondern das verschiedenste Messköpfe verwendet werden können.

Es wird als ein wesentlicher Vorteil der Erfindung angesehen, dass es keine elektrische Verbindung zwischen dem Messkopf und dem Tastsystem braucht. Ausserdem ist die Codierung einfach durchzuführen und es braucht zum Einstellen der Codierung kein Werkzeug.

## Patentansprüche

1. Vorrichtung (10) mit abnehmbarem Messkopf (15) zum Vermessen eines Werkstücks (11), **dadurch gekennzeichnet, dass**
- die Vorrichtung (10) einen Aufnahmebereich (17.1) zum Ankoppeln des Messkopfes (15) aufweist,
- im Aufnahmebereich (17.1) n Sensoren (17.2) in fest vorgegebenen Positionen angeordnet sind, wobei n eine ganze Zahl grösser gleich zwei ist,
- der abnehmbare Messkopf (15) m Gegenelemente (15.6) aufweist, wobei m eine ganze Zahl grösser gleich eins ist, die mit den n Sensoren (17.2) in Wechselwirkung stehen, wenn der Messkopf (15) im Aufnahmebereich (17.1) angekoppelt ist, wobei eine Codierung des abnehmbaren Messkopfes (15) vorgebbar ist, indem die Position der m Gegenelemente (15.6) eingestellt wird.

2. Vorrichtung (10) nach Anspruch 1, **dadurch gekennzeichnet, dass** die n Sensoren (17.2) im Aufnahmebereich (17.1) auf einem Kreisbogensegment (17.3) mit einem Radius R1 angeordnet sind und zwischen den n Sensoren (17.2) jeweils ein Winkelabstand β1 liegt.

3. Vorrichtung (10) nach Anspruch 2, **dadurch gekennzeichnet, dass** die m Gegenelemente (15.6) am abnehmbaren Messkopf (15) auf einem Kreisbogensegment (15.4) mit einem Radius R2 angeordnet sind und zwischen den m Gegenelementen (15.6) jeweils ein Winkelabstand β2 liegt, wobei R2 ≈ R1 und β2 ≈ β1 ist.

4. Vorrichtung (10) nach Anspruch 1, 2 oder 3, **dadurch gekennzeichnet, dass** die Sensoren (17.2) Magnetfeldsensoren und die Gegenelemente (15.6) Magnete sind.

5. Vorrichtung (10) nach einem der Ansprüche 1 bis 4, **dadurch gekennzeichnet, dass** die Vorrichtung (10) einen Verstellmechanismus in Form eines mechanisch verdrehbaren Mittels aufweist, wobei sich je nach Winkellage des verdrehbaren Mittels durch die relative Winkellage der n Sensoren (17.2) in Bezug auf die m Gegenelemente (15.6) eine andere Codierung ergibt.

6. Vorrichtung (10) nach Anspruch 5, **dadurch gekennzeichnet, dass** durch die Wechselwirkung in der Vorrichtung (10) Signale entstehen, die eine binäre Codierung repräsentieren.

7. Vorrichtung (10) nach Anspruch 6, **dadurch gekennzeichnet, dass** durch die binäre Codierung 2ⁿ verschiedene Abtastköpfe (15) unterschieden werden können.

8. Vorrichtung (10) nach einem der vorhergehenden Ansprüche, **dadurch gekennzeichnet, dass** eine Auswerteeinheit vorgesehen ist, welche die n Sensoren (17.2) auswertet, um daraus eine Aussage über die Codierung zu ermitteln.

9. Vorrichtung (10) nach einem der vorhergehenden Ansprüche, **dadurch gekennzeichnet, dass** es sich bei der Vorrichtung (10) um ein Messgerät handelt und der Abtastkopf (15) einen Wechselteller (15.3) mit Taster (15.1, 15.2) zum Abtasten drei-dimensionaler Werkstücke (11), wie zum Beispiel Zahnräder, ist.

10. Messgerät mit mehreren abnehmbaren Messköpfen (15) zum Vermessen eines Werkstücks (11), **dadurch gekennzeichnet, dass**
- das Messgerät ein Tastsystem (17) mit einem Aufnahmebereich (17.1) zum Ankoppeln eines der Messköpfe (15) aufweist,
- im Aufnahmebereich (17.1) n Sensoren (17.2) in fest vorgegebenen Positionen angeordnet sind, wobei n eine ganze Zahl grösser gleich zwei ist,
- jeder der mehreren abnehmbaren Messköpfe (15) m Gegenelemente (15.6) aufweist, wobei m eine ganze Zahl grösser gleich eins ist, die mit den n Sensoren (17.2) in Wechselwirkung stehen, wenn der eine Messkopf (15) im Aufnahmebereich (17.1) angekoppelt ist, wobei eine Codierung der mehreren abnehmbaren Messköpfe (15) vorgebbar ist, indem an jedem der mehreren abnehmbaren Messköpfe (15) die Position der m Gegenelemente (15.6) einstellbar ist.

11. Messgerät (10) nach Anspruch 10, **dadurch gekennzeichnet, dass** es sich um ein CNC-gesteuertes Verzahnungsmessgerät zum Prüfen von Werkstücken (11) handelt.
